# EUROPÄISCHE PATENTSCHRIFT

(11) **EP 3 969 817 B1**
(45) Veröffentlichungstag und Bekanntmachung des Hinweises auf die Patenterteilung: **12.07.2023**
(21) Anmeldenummer: 20726338.5
(22) Anmeldetag: 12.05.2020
(51) Int. Cl.: F24C 7/08

(54) **GARGERÄT MIT AUSSERHALB DES GARRAUMS ANGEORDNETEN SENSOREINHEITEN**
COOKING APPLIANCE WITH SENSOR UNITS WHICH ARE LOCATED OUTSIDE THE COOKING COMPARTMENT
APPAREIL DE CUISSON AVEC DES UNITÉS DE DÉTECTION SITUÉES EN DEHORS DE L'ESPACE DE CUISSON

(30) Priorität: 13.05.2019 DE 102019206892
(43) Veröffentlichungstag der Anmeldung: 23.03.2022
(73) Patentinhaber: BSH Hausgeräte GmbH, 81739 München (DE)
(72) Erfinder: KUCHLER, Markus, 83257 Gstadt am Chiemsee (DE); RIGORTH, Kerstin, 84453 Mühldorf (DE); STERZ, Sebastian, 86845 Großaitingen (DE); VOGT, Matthias, 74182 Obersulm (DE)
(86) Internationale Anmeldenummer: PCT/EP2020/063156
(87) Internationale Veröffentlichungsnummer: WO 2020/229452

(56) Entgegenhaltungen:
- EP-A1- 1 921 384
- EP-A1- 3 410 017
- WO-A1-2015/141207
- US-A1- 2016 366 314

## Beschreibung

Die Erfindung betrifft ein Gargerät, aufweisend einen mittels einer Garraumwandung begrenzten Garraum, mindestens zwei außerhalb des Garraums angeordnete Sensoreinheiten und eine Öffnung in der Garraumwandung, durch welche mittels einer der mindestens zwei Sensoreinheiten mindestens eine Eigenschaft des Garraums detektierbar ist. Die Erfindung ist insbesondere vorteilhaft anwendbar auf Haushalts-Gargeräte, insbesondere Backöfen und/oder Mikrowellengeräte.

WO 2015/141207 A1 offenbart ein Gargerät, aufweisend einen Infrarotsensor, der außerhalb eines Garraums vorgesehen ist und der eine Vielzahl von Infrarotsensorelementen verwendet, um die Temperatur eines zu erhitzenden Objekts zu erfassen; und einen Richtungssetzmotor, der die Richtung des Infrarotsensors ändern kann. Das Gargerät ist dazu so konfiguriert, dass sich die Richtung des Infrarotsensors zu einer Temperaturerfassungsposition bewegt, wenn die Temperaturerfassung durchgeführt wird, und die Richtung des Infrarotsensors zu einer Bereitschaftsposition bewegt wird, wenn keine Temperaturerfassung durchgeführt wird. Infolgedessen ist es möglich, eine Trübung der Linse des Infrarotsensors und eine Temperaturerhöhung des Infrarotsensors selbst zu verhindern. So ist es beispielsweise möglich, den Infrarotsensor in einem Zustand zu halten, in dem es möglich ist, die Temperatur auch direkt nach einer Dampferhitzung zu erfassen.

EP 0 924 964 A2 offenbart einen Mikrowellenherd mit einem Infrarotsensor zum Erfassen der Temperatur von Speisen während des Garens. Der Infrarotsensor ist von der oberen Vorderkante des Garraums schräg nach unten und nach hinten gerichtet. Ein Verschluss oder Blende schützt den Sensor, wenn er nicht zum Erfassen der Lebensmitteltemperatur benötigt wird.

Es ist die **Aufgabe** der vorliegenden Erfindung, die Nachteile des Standes der Technik zumindest teilweise zu überwinden und insbesondere eine verbesserte Möglichkeit bereitzustellen, Messwerte eines Garraums oder eines in dem Garraum befindlichen Garguts abzufühlen.

Diese Aufgabe wird gemäß den Merkmalen der unabhängigen Ansprüche gelöst. Vorteilhafte Ausführungsformen sind Gegenstand der abhängigen Ansprüche, der Beschreibung und der Zeichnungen.

Die Aufgabe wird gelöst durch ein Gargerät, aufweisend einen mittels einer Garraumwandung begrenzten Garraum, mindestens zwei außerhalb des Garraums angeordnete Sensoreinheiten und eine Öffnung in der Garraumwandung (im Folgenden auch als "Wandungsöffnung" bezeichnet), durch welche mittels einer der mindestens zwei Sensoreinheiten mindestens eine Eigenschaft des Garraums detektierbar ist, wobei
- außerhalb des Garraums eine motorisch bewegbare Vorrichtung ("Wechselvorrichtung") vorhanden ist,
- die Wechselvorrichtung mit mindestens zwei Sensoreinheiten zur Detektion mindestens einer Eigenschaft des Garraums ausgerüstet ist und
- die Wechselvorrichtung durch motorische Bewegung so einstellbar ist, dass jeweils eine der Sensoreinheiten vor die Öffnung verbringbar ist.

Dieses Gargerät ergibt den Vorteil, dass die Wandungsöffnung zeitlich versetzt durch unterschiedliche Sensoreinheiten verwendet werden kann. So kann eine besonders vorteilhafte Sensorposition für alle diese Sensoreinheiten genutzt werden. Ein weiterer Vorteil für den Fall, dass mindestens zwei der Sensoreinheiten bildgebende Sensoreinheiten sind (z.B. eine optische Kamera und eine IR-Kamera), besteht darin, dass die Bilder dieser Sensoren ohne weitere Anpassung überlagert werden können, da beide den Garraum bzw. das Gargut aus der gleichen Perspektive abbilden. Es befindet sich jeweils nur die gerade benötigte Sensoreinheit an der Wandungsöffnung, so dass die nicht verwendeten Sensoreinheiten vor Verschmutzung (z.B. Wrasen, Fettspritzern usw.) und/oder Einstrahlung von Wärmestrahlen aus dem Garraum durch die Wandungsöffnung geschützt sind. Noch ein weiterer Vorteil besteht darin, dass durch das Vorsehen nur einer Wandungsöffnung für mehrere Sensoreinheiten ein Wärmeverlust aus einem heißen Garraum besonders gering gehalten werden kann.

Das Gargerät ist vorteilhafterweise ein Haushalts-Gargerät. Das Gargerät ist insbesondere ein Backofen, ein Mikrowellengerät oder eine Kombination davon, z.B. ein Backofen mit Mikrowellenfunktion. Das Gargerät kann auch eine Dampfbehandlungsfunktion aufweisen. Es ist eine Weiterbildung, dass der Garraum eine vorderseitige Beschickungsöffnung aufweist, die mittels einer Tür verschließbar ist. Insbesondere bei Vorliegen eines Backofens kann die geräteinterne Garraumwandung (ohne Tür) auch als Muffel bezeichnet werden.

Die Sensoreinheit kann ein oder mehrere einzelne Sensorelemente aufweisen. Die Sensoreinheit ist insbesondere eine separat hergestellte Einheit, die an der Wechselvorrichtung befestigt ist.

Es ist eine Weiterbildung, dass die Wandungsöffnung insbesondere eine freie oder durchlässige Öffnung ist, d.h., eine Öffnung, die nicht permanent mittels einer Scheibe (z.B. einer transparenten Glasscheibe) o.ä. abgedeckt ist. Dies ermöglicht vorteilhafterweise eine hochgradig unbeeinflusste Detektion oder Messung der mindestens einen Eigenschaft des Garraums. Alternativ kann die Wandungsöffnung permanent von einer Schutzscheibe abgedeckt sein, wenn diese für alle Sensoreinheiten messtechnisch durchlässig ist, also eine Messung der zugehörigen mindestens einen Eigenschaft des Garraums für alle Sensoreinheiten zulässt. Umfassen die Sensoreinheiten beispielsweise ein optische Kamera und eine IR-Kamera, kann eine permanente Schutzscheibe in Form einer für das optische und das betreffende IR-Spektrum (z.B. NIR-Spektrum) durchsichtigen, insbesondere transparenten Scheibe vorhanden sein.

Die mindestens eine Eigenschaft des Garraums kann beispielsweise eine physikalische Größe wie eine Helligkeits- und/oder Farbverteilung auf einer Gargutoberfläche (z.B. zur Bestimmung eines Bräunungsgrads von Gargut), eine Temperatur des Garraums, eine Temperaturverteilung auf einer oder mehreren Gargutoberflächen, eine Feuchtigkeit in dem Garraum usw. und/oder eine chemische Größe wie ein Anteil eines oder mehrerer chemischer Stoffe an einer Garraumatmosphäre, z.B. einen Sauerstoffanteil usw., umfassen. Eine Eigenschaft des Garraums kann somit beispielsweise eine Eigenschaft der Garraumatmosphäre und/oder eine Eigenschaft von in dem Garraum befindlichem Gargut umfassen.

Die außerhalb des Garraums vorhandene Wechselvorrichtung ist insbesondere innerhalb des Gargeräts untergebracht, beispielsweise in einem Zwischenraum zwischen der Garraumwandung und einem äußeren Gehäuse des Gargeräts. Es ist eine Weiterbildung, dass die Wechselvorrichtung oberhalb des Garraums angeordnet ist, weil dort besonders viel Platz zu dessen Unterbringung vorhanden ist.

Die Wechselvorrichtung ist insbesondere mittels mindestens eines Antriebsmotors wie eines Elektromotors, insbesondere Schrittmotors, motorisch verfahrbar.

Dass durch Bewegen der Wechselvorrichtung (als Ganzes oder eines Teils davon) jeweils eine der Sensoreinheiten vor die Wandungsöffnung bewegbar oder verbringbar ist, umfasst insbesondere, dass jeder der Sensoreinheiten eine bestimmte Stellung (im Folgenden auch als "Aktivstellung" bezeichnet) zugeordnet ist, in welcher diese Sensoreinheit mindestens eine zugehörige Eigenschaft des Garraums durch die Wandungsöffnung detektieren kann. Dabei kann sich pro Zeitabschnitt nur jeweils eine der Sensoreinheiten vor der Wandungsöffnung befinden. Die anderen Sensoreinheiten sind dagegen von der Wandungsöffnung entfernt angeordnet (was im Folgenden auch als "Standby-Stellung" bezeichnet wird) und können diese nicht nutzen. Mittels der Wechselvorrichtung sind also die daran vorhandenen Sensoreinheiten wechselweise einzeln vor die Wandungsöffnung in der Garraumwandung bewegbar.

Es ist eine Weiterbildung, dass der Motor mit einer Steuereinrichtung des Gargeräts verbunden ist, um die jeweilige Sensoreinheit bei Bedarf automatisch - z.B. programmgesteuert und/oder situationsabhängig, z.B. ereignisgesteuert - vor die Wandungsöffnung zu verbringen.

Es ist eine Ausgestaltung, dass die Wechselvorrichtung mehrere motorisch verfahrbare Träger aufweist, an denen jeweils eine Sensoreinheit angeordnet ist. Diese Ausgestaltung weist den Vorteil auf, dass sie besonders vielgestaltig ausbildbar ist. Die Träger können insbesondere jeweils zwei Positionen oder Stellungen dauerhaft einnehmen, nämlich die Aktivstellung und die Standby-Stellung. Die Träger können wechselweise in ihre Aktivstellung verbracht werden. Es ist eine Weiterbildung, dass die Träger zwischen ihrer Aktivstellung und ihrer Standby-Stellung umgeklappt werden können. Es ist eine Weiterbildung, dass die Träger, insbesondere umklappbare Träger, ringförmig um die Wandungsöffnung angeordnet sind. Dabei kann in einer Weiterbildung jeder der Träger mit einem zugehörigen Motor verbunden sein. Alternativ können alle Träger mittels eines einzigen Motors bewegbar sein.

Es ist eine Ausgestaltung, dass die Wechselvorrichtung einen motorisch verfahrbaren Träger aufweist, an dem die mindestens zwei Sensoreinheiten angeordnet sind. Dieser Träger ist also ein gemeinsamer Träger für die mindestens zwei Sensoreinheiten. Bei Bewegung dieses gemeinsamen Trägers werden alle daran angeordneten Sensoreinheiten mitbewegt. Diese Ausgestaltung lässt sich besonders einfach, robust und preiswert umsetzen.

Es ist eine Ausgestaltung, dass mindestens eine der Sensoreinheiten
- einen optischen Sensor,
- einen Temperatursensor,
- einen Feuchtigkeitssensor und/oder
- einen Stoffsensor
aufweist oder ist.

Der optische Sensor kann eine optische Kamera, z.B. eine bildgebende Digitalkamera sein, insbesondere eine Farbkamera. Der Temperatursensor kann ein Temperaturfühler oder eine bildgebende Wärmebild (IR)-Kamera sein. Der Stoffsensor kann ein Sauerstoffsensor sein, z.B. eine Lambdasonde. Der Stoffsensor kann ein Spektrometer sein.

Es ist eine Ausgestaltung, dass die Wechselvorrichtung zusätzlich mit mindestens einer vor die Wandungsöffnung bewegbaren oder verbringbaren Abdeckung ausgerüstet ist. Dadurch wird der Vorteil erreicht, dass die Öffnung in der Garraumwandung verschließbar ist und die Sensoreinheiten vor Einflüssen aus dem Garraum wie Wärme (z.B. während eines Garvorgangs oder eines Pyrolysevorgangs) und/oder Verschmutzung geschützt sind und darüber hinaus ein Wärmeverlust aus einem heißen Garraum ganz besonders gering gehalten werden kann.

Es ist eine Weiterbildung, dass die Wechselvorrichtung so einstellbar ist, dass die Abdeckung anstelle der Sensoreinheiten vor die Wandungsöffnung verbringbar ist. Insbesondere kann die Abdeckung analog zu einer Sensoreinheit angeordnet und bewegbar sein. So kann für den Fall, dass die Wechselvorrichtung mehrere motorisch verfahrbare Träger aufweist, an einem der Träger die Abdeckung anstelle einer Sensoreinheit vorhanden sein. Für den Fall, dass die Wechselvorrichtung einen motorisch verfahrbaren Träger aufweist, an dem die mindestens zwei Sensoreinheiten angeordnet sind, kann an dem Träger auch die Abdeckung vorhanden sein.

Die an dem Träger vorgesehene Abdeckung kann ein separat hergestelltes Bauteil oder ein integraler Teilbereich des Trägers sein.

Es ist eine Weiterbildung, dass die Wechselvorrichtung zusätzlich oder alternativ zu der oben beschriebenen, an einem Träger befestigten Abdeckung eine weitere vor die Wandungsöffnung bewegbare Abdeckung in Form einer Schutzscheibe aufweist, wobei diese Schutzscheibe (im Gegensatz zu einer permanent vor der Wandungsöffnung befestigten Schutzscheibe) für mindestens eine der Sensoreinheiten messtechnisch durchlässig ist, also eine Messung der zugehörigen mindestens einen Eigenschaft des Garraums zulässt, und für mindestens eine andere der Sensoreinheiten messtechnisch undurchlässig ist. Ist beispielsweise eine der Sensoreinheiten eine optische Kamera und eine andere der Sensoreinheiten eine IR-Kamera, kann die bewegbare Schutzscheibe eine im optischen Bereich durchlässige, aber im IR-Bereich nicht oder nicht ausreichend durchlässige Scheibe (z.B. eine Glasscheibe) sein. Die Wechselvorrichtung kann so eingerichtet sein oder angesteuert werden, dass die Schutzscheibe dann die Wandungsöffnung überdeckt, wenn sich eine Sensoreinheit vor der Wandungsöffnung befindet, für welche die Schutzscheibe messtechnisch durchlässig ist, und die Wandungsöffnung freigibt, wenn sich eine Sensoreinheit vor der Wandungsöffnung befindet, für welche die Schutzscheibe messtechnisch undurchlässig ist. Es ist also eine Weiterbildung, dass die Schutzscheibe die Wandungsöffnung nur bedarfsweise überdeckt oder nur bedarfsweise von der (dann zeitweise freien) Wandungsöffnung entfernt wird. Auch die Bewegung der Schutzscheibe kann motorisch erfolgen.

Es ist eine Ausgestaltung, dass die Garraumwandung im Bereich der Wandungsöffnung als eine - insbesondere trichter- oder kegelstumpfförmige - Ausstülpung geformt ist, die sich in Richtung des Garraums aufweitet. Die Ausstülpung kann als eigenständiges Bauteil vorgefertigt worden sein. Die Schutzscheibe kann, falls vorhanden, insbesondere vor die garraumseitige Stirnfläche der Ausstülpung bewegt werden. Die Wandungsöffnung kann insbesondere der garraumabgewandten Stirnfläche der Ausstülpung entsprechen.

Es ist eine Weiterbildung, dass diejenige Verfahrstellung, bei der die Wandungsöffnung durch die an dem Träger vorhandene Abdeckung überdeckt ist, eine "Normalstellung" oder "Ruhestellung" der Wechselvorrichtung ist und die anderen Sensoreinheiten nur bei Bedarf vor die Wandungsöffnung verfahren werden und folgend wieder die Normalstellung eingenommen wird. Dadurch werden die Sensoreinheiten vorteilhafterweise nur an die Öffnung herangebracht und damit dem heißen und/oder (z.B. durch Fettspritzer, Flüssigkeitsspritzer oder Wrasen) schmutzigen Garraum ausgesetzt, wenn eine Messung notwendig ist. In einer Weiterbildung wird die Wechselvorrichtung unmittelbar nach Ablauf der Messzeit der sich vor der Öffnung befindlichen Sensoreinheit wieder in die Ruhestellung zurückgefahren und die Sensoreinheit dadurch wieder in eine geschützte Position gebracht. Die Expositionszeit für die Sensoreinheiten ist dadurch gering, was auch für den Wärmeverlust aus dem heißen Garraum gilt.

Es ist eine Weiterbildung, dass die Wechselvorrichtung zumindest mit einer bildgebenden Digitalkamera und einer bildgebenden IR-Kamera versehen oder bestückt ist und insbesondere auch eine Abdeckung aufweist oder bereitstellt.

Es ist eine insbesondere für den Fall, dass die Wechselvorrichtung einen motorisch bewegbaren Träger aufweist, an dem die mindestens zwei Sensoreinheiten angeordnet sind, eine vorteilhafte Ausgestaltung, dass der Träger motorisch drehbar ist und dessen Winkelstellungen so einstellbar sind, dass durch Drehung des Trägers jeweils eine der Sensoreinheiten vor die Öffnung verbringbar ist. So wird der Vorteil erreicht, dass eine besonders kompakte und robuste Anordnung bereitgestellt werden kann. Für den Fall, dass an dem Träger auch eine Abdeckung vorhanden ist, kann diese analog zu den Sensoreinheiten angeordnet sein. Dabei kann der Träger z.B. über eine Antriebswelle mit einem Motor bzw. mit einer Antriebswelle des Motors verbunden sein. Durch Drehung der Antriebswelle lassen sich gezielt vorgegebene Winkelstellungen des Trägers um seine Drehachse einstellen.

Der Träger kann innerhalb eines begrenzten Winkelbereichs, d.h., in einem Winkelbereich kleiner 360°, drehbar sein oder kann alternativ umlaufend drehbar sein. Der Träger kann über eine Antriebswelle mit dem Motor bzw. mit einer Antriebswelle des Motors verbunden sein. Durch Drehung des Motors lassen sich gezielt vorgegebene Winkelstellungen des Trägers um seine Drehachse einstellen. Dass durch Drehung des Trägers jeweils eine der Sensoreinheiten vor die Öffnung verbringbar ist, umfasst insbesondere, dass jeder der Sensoreinheiten eine bestimmte Winkelstellung zugeordnet ist, in welcher diese Sensoreinheit mindestens eine zugehörige Eigenschaft des Garraums durch die Öffnung detektieren kann.

Es ist eine Ausgestaltung, dass die Sensoreinheiten (und ggf. die Abdeckung) bogenförmig um eine Drehachse des Trägers angeordnet sind. So wird vorteilhafterweise erreicht, dass sie durch einfache Drehung präzise an der Wandungsöffnung positionierbar sind. Die bogenförmige Anordnung kann eine kreis- oder ringsektorförmige Anordnung sein.

Es ist eine Ausgestaltung, dass die Sensoreinheiten (und ggf. die Abdeckung) in Bezug auf die Drehachse des Trägers radial nach außen ausgerichtet sind. Dies ergibt den Vorteil einer besonders einfachen und kompakten Anordnung. Diese Ausgestaltung umfasst insbesondere, dass ein Mess- oder Sichtfeld der Sensoreinheiten radial zu der Drehachse ausgerichtet ist. Beispielweise kann eine optische Achse einer Kamera in Bezug auf die Drehachse des Trägers radial nach außen ausgerichtet sein.

Es ist eine Weiterbildung davon, dass die Drehachse des Trägers zumindest annähernd parallel zu einer die Wandungsöffnung aufweisenden Wand der Garraumwandung ausgerichtet ist. In anderen Worten ist die Drehachse des Trägers zumindest annähernd senkrecht zu einer Normalenrichtung der Wandungsöffnung ausgerichtet.

Die Wand der Garraumwandung, in der sich die Wandungsöffnung befindet, kann allgemein beispielsweise eine Decke, eine Rückwand, eine linke Seitenwand, eine rechte Seitenwand oder eine Rückwand sein. Die Wandungsöffnung kann sich auch in einem Übergang zwischen solchen Wänden befinden. Die Wand der Garraumwandung kann auch die den Garraum verschließende Tür umfassen, da diese im geschlossenen Zustand ebenfalls einen Bereich oder eine Seite der Garraumwandung darstellt. Es ist somit eine Weiterbildung, dass die Wechselvorrichtung einschließlich der daran angebrachten Sensoreinheiten in einer Tür des Gargeräts untergebracht ist. Dies ergibt den Vorteil, dass ein Betrachtungswinkel aus der geschlossenen Tür in etwa dem Betrachtungswinkel eines Nutzers entspricht, wenn er die Tür zum Nachschauen öffnet.

Es ist eine alternative Ausgestaltung, dass die Sensoreinheiten parallel zu der Drehachse des Trägers ausgerichtet sind, beispielsweise nach Art eines Revolvers. Die Drehachse des Trägers liegt dann insbesondere zumindest ungefähr senkrecht versetzt zu einer die Öffnung aufweisenden Wand der Garraumwandung bzw. zumindest ungefähr parallelversetzt zu einer Normalenrichtung der Wandungsöffnung.

Es ist eine Ausgestaltung, dass der Träger eine bogensektorförmig, insbesondere ringsektorförmig, um seine Drehachse angeordnete bandförmige Trägerwand aufweist, wobei an der Trägerwand zueinander winkelversetzt mindestens zwei Bestückplätze für Sensoreinheiten vorhanden sind. So wird vorteilhafterweise eine besonders einfach herstellbare und robuste Möglichkeit bereitgestellt, die Sensoreinheiten an dem Träger zu befestigen. Ist eine separat hergestellte Abdeckung vorhanden, kann für diese ebenfalls ein Bestückplatz vorgesehen sein. Eine separat hergestellte Abdeckung ergibt den Vorteil, dass sie im Vergleich zu dem Material des Trägers (z.B. Kunststoff) auf besonders einfache Weise aus besonders hitzebeständigem Material herstellbar ist, z.B. aus Keramik oder verspiegeltem Metall. Alternativ kann die Abdeckung in den Träger integriert sein, für welchen Fall kein speziell ausgestalteter Bestückplatz vorgesehen zu sein braucht.

Alternativ zu einem motorisch drehbaren Träger kann der Träger motorisch translatorisch, insbesondere linear, verfahrbar oder verschiebbar sein. Anstelle einer bogenförmigen Trägerwand kann diese dann z.B. als ebenes Band oder Platte ausgebildet sein und z.B. parallel zu der die Öffnung aufweisenden Garraumwand bewegbar sein.

Die Ausbildung als ebene Platte kann aber auch vorteilhaft sein, wenn die Sensoreinheiten parallel zu der Drehachse des drehbaren Trägers ausgerichtet sind. Die Trägerwand kann dann z.B. als kreisförmige oder kreissektorförmige Platte ausgebildet sein.

Es ist eine Ausgestaltung, dass
- eine Außenseite der Trägerwand vor der Öffnung in der Garraumwandung entlang bewegbar ist und
- an einer Innenseite der Trägerwand zueinander versetzt mindestens zwei Bestückplätze für Sensoreinheiten vorhanden sind, die jeweils eine Befestigungsstruktur für eine zugehörige Sensoreinheit aufweisen.

So wird der Vorteil erreicht, dass die Sensoreinheiten einfach an dem Träger befestigbar sind und auch ohne Justage präzise vor die Öffnung in der Garraumwandung bewegbar sind. Dass eine Außenseite der Trägerwand vor der Öffnung in der Garraumwandung entlang bewegbar ist, umfasst insbesondere, dass sich die Trägerwand (aus Sicht des Trägers) vor der Wandungsöffnung entlang ihrer Längserstreckung drehen oder translatorisch bewegen kann. Die Trägerwand verbleibt dabei insbesondere vor der Öffnung, jedoch je nach Stellung mit einem anderen Abschnitt. Die Längserstreckung der Trägerwand entspricht für den Fall, dass der Träger drehbar ist und die Sensoreinheiten in Bezug auf die Drehachse des Trägers radial nach außen ausgerichtet sind, ihrer Bewegungsrichtung, beispielsweise bei Drehbarkeit einer Umfangsrichtung der Drehachse.

Es ist eine Ausgestaltung, dass zumindest einer der Bestückplätze ein mit der Wandungsöffnung in der Garraumwandung in Deckung bringbares Fenster aufweist. Durch das in Überdeckung Bringen des Fensters mit der Wandungsöffnung kann für die jeweilige Sensoreinheit die Einsicht in den Garraum bereitgestellt werden. Das Fenster kann z.B. ein Durchbruch oder Loch in der Trägerwand sein. Es ist eine Weiterbildung, dass alle für Sensoreinheiten vorgesehene Bestückplätze (im Folgenden auch als "Sensor-Bestückplätze" bezeichnet) ein solches Fenster aufweisen.

Die Sensoreinheiten können in grundsätzlich beliebiger Reihenfolge an der Trägerwand angeordnet sein.

Es ist eine Ausgestaltung, dass mindestens zwei Bestückplätze bzw. die zugehörigen Sensoreinheiten durch eine Abdeckung voneinander getrennt sind, sich die Abdeckung in Bewegungsrichtung des Trägers, insbesondere der Trägerwand, also insbesondere zwischen den mindestens zwei Bestückplätzen befindet. So wird der Vorteil erreicht, dass eine nur geringe Bewegung oder Verfahrung nötig ist, um Bestückplätze bzw. die in diesen vorhandenen Sensoreinheiten aus der Ruhestellung vor die Wandungsöffnung zu bringen.

Es ist eine Ausgestaltung, dass mindestens zwei Bestückplätze bzw. die zugehörigen Sensoreinheiten nebeneinander an einem Endabschnitt der Trägerwand angeordnet sind und die Abdeckung an dem anderen Endabschnitt angeordnet ist. Dadurch wird der Vorteil erreicht, dass die Bestückplätze bzw. die zugehörigen Sensoreinheiten in der Ruhestellung des Trägers, bei der die Wandungsöffnung durch die Abdeckung abgedeckt ist, vergleichsweise weit von der Garraumwandung entfernt positioniert sind und folglich besonders geringen Temperaturen ausgesetzt sind.

Es ist eine Ausgestaltung, dass die Sensoreinheiten in dem Gargerät belüftbar angeordnet sind. Dadurch können sie vorteilhafterweise während eines Garbetriebs gekühlt werden. Es ist eine Weiterbildung, dass das Gargerät mindestens einen Lüfter oder Ventilator aufweist, mittels dessen in dem Gargerät (typischerweise zwischen der Garraumwandung und einem Gehäuse des Gargeräts) ein geräteinterner Kühlluftstrom (forciert) erzeugbar ist. Ein solcher Kühlluftstrom kann ein Kühlluftstrom sein, der bereits zur Kühlung anderer Bereiche genutzt wird oder worden ist, z.B. zur Kühlung einer Elektronik und/oder zur Türkühlung. Ein solcher Kühlluftstrom kann aber auch ein eigenständiger, insbesondere auch separater Kühlluftstrom sein, der von außen zu der Wechselvorrichtung, insbesondere zu deren Sensoreinheiten, führt. Eine verbesserte Kühlung der Sensoreinheiten ergibt sich allgemein dann, wenn Kühlluft direkt von außen oder von einem kühleren Bodenbereich des Geräts zu den Sensoreinheiten geführt wird. Insbesondere können die Sensoreinheiten in dem geräteinternen Kühlluftstrom angeordnet sein. Es ist eine Weiterbildung, dass der Träger dazu luftdurchlässig ausgebildet ist, beispielweise durch Vorsehen geeigneter Durchbrüche, Schlitze usw. Alternativ kann die Trägerwand mit der Drehachse über eine Rahmenkonstruktion verbunden sein.

Es ist eine Weiterbildung, dass ein Bestückplatz eine an einem Fenster in einer Trägerwand innenseitig ansetzende Hülse aufweist, In diese Hülse kann rückwärtig ein dem Garraum zugewandter Bereich einer Sensoreinheit eingesetzt, insbesondere eingesteckt, werden, oder die Sensoreinheit kann an die Hülse angesetzt (aber nicht eingeführt) werden. Eine vordere offene Stirnfläche der Hülse kann dem Fenster entsprechen, während die hintere oder rückwärtige offene Stirnfläche als Ansatz- oder Einsetzöffnung für die Sensoreinheit vorgesehen ist. Ist die Sensoreinheit eine Kamera, kann z.B. deren Objektiv rückseitig an die Hülse angesetzt (z.B. auf die Hülse aufgesetzt) werden oder in die Hülse eingesetzt werden. Der an oder in der Hülse befindliche Bereich der Sensoreinheit ist in der Regel derjenige Bereich, der am stärksten der aus der Wandungsöffnung einfallenden Wärmestrahlung und zudem Verschmutzungen wie Flüssigkeits- oder Fettspritzern ausgesetzt ist. Die Hülse kann daher vorteilhafterweise als Positionierungshilfe und Abstandshalter für die zugehörige Sensoreinheit dienen. Die Hülse kann seitlich oder mantelseitig durchbrochen sein, um eine Querung der Hülse durch den Kühlluftstrom zu ermöglichen. Ist die Sensoreinheit in die Hülse eingesetzt oder angesetzt, kann der durch die Hülse geleitete Luftstrom eine Kühlung der zugehörigen Sensoreinheit bewirken. Die Hülse ermöglicht somit vorteilhafterweise eine einfache Positionierung der zugehörigen Sensoreinheit an dem Träger und deren Kühlung in Aktiv- und Standby-Stellung.

Um die Sensoreinheit besonders effektiv zu schützen, ist es eine Weiterbildung, dass die Hülse als Luftstromsammler ausgebildet ist oder mit einem Luftstromsammler verbunden ist. Der Luftstromsammler befindet sich in dem Kühlluftstrombereich des Gargeräts und ist so geformt und ausgerichtet, dass er einen Teil des Kühlluftstroms gezielt in die Hülse leitet. Auf der entgegengesetzten Seite der Hülse kann sie eine Luftauslassöffnung aufweisen. Folglich ermöglicht der Luftstromsammler einen besonders zuverlässigen, die Hülse querenden Luftstrom.

Es ist eine Weiterbildung, dass der Luftstromsammler einen sich in Strömungsrichtung der eintretenden Luft verengenden Strömungsquerschnitt aufweist. Dadurch wird eine Strömungsgeschwindigkeit der Kühlluft in der Hülse erhöht, was eine Kühlwirkung verstärkt. Auch kann der Kühlluftstrom so stark sein, dass er nun eintretende Fett- und Flüssigkeitsspritzer vor der Sensoreinheit ablenkt. Der Luftstromsammler ermöglicht somit vorteilhafterweise eine einfache Positionierung der zugehörigen Sensoreinheit an dem Träger, deren Kühlung in Aktiv- und Standby-Stellung und einen Verschmutzungsschutz in Aktivstellung. Der Luftstromsammler kann beispielsweise trichterförmig sein, mit seiner breiteren Öffnung gegen die Richtung des Kühlluftstroms gerichtet sein und mit seiner schmaleren Öffnung seitlich in die Hülse münden. Auf der entgegengesetzten Seite kann die Hülse eine Luftauslassöffnung aufweisen.

Es ist eine Ausgestaltung, dass zwischen der Trägerwand im Bereich der Fenster und der Garraumwandung im Bereich der Öffnung ein insbesondere forciert belüftbarer Spalt vorhanden ist, durch den ein Luftstrom geführt werden kann. So wird ebenfalls der Vorteil erreicht, dass eine sich in ihrer Aktivstellung befindliche Sensoreinheit vor Verschmutzung aus dem Garraum geschützt wird und gekühlt wird.

Es ist eine Weiterbildung, dass die Abdeckung die Öffnung in der Garraumwandung spaltfrei überdeckt. Befinden sich also alle Sensoreinheiten in ihrer Standby-Position (was einer Ruhestellung des Trägers bzw. der Wechselvorrichtung entspricht) können mittels der Abdeckung zeitgleich die Garraumöffnung und der Luftkanal abgeschlossen werden. Dazu kann die Abdeckung z.B. außenseitig an einer Trägerwand überstehen, insbesondere mit einer Höhe, welche der Spaltbreite entspricht oder fast entspricht.

Grundsätzlich kann die Wechselvorrichtung auch translatorische Bewegungen und Drehbewegungen kombinieren und/oder sie kann Drehbewegungen einer Sensoreinheit um mehrere unterschiedliche Drehachsen ermöglichen. Beispielsweise kann eine Wechselvorrichtung eine um eine erste - insbesondere vertikale - Drehachse motorisch drehbare - beispielsweise kreisscheibenförmige - Basis aufweisen, an der mehrere Ausleger drehbar oder verschwenkbar angebracht sind, wobei an jedem der Ausleger eine Sensoreinheit angebracht ist. Die Drehachsen der Ausleger können jeweils zu der Drehachse der Basis senkrecht ausgerichtet sein, z.B. in horizontaler Richtung, und zueinander winkelversetzt oder verkippt sein, z.B. in Umfangsrichtung der ersten Drehachse.

Die Aufgabe wird auch gelöst durch ein Verfahren zum Betreiben eines Gargeräts wie oben beschrieben. Das Verfahren kann analog zu dem Gargerät ausgebildet werden und weist die gleichen Vorteile auf.

So ist es eine Ausgestaltung, dass während eines Garbetriebs zumindest eine der Sensoreinheiten bei Bedarf durch Bewegung der Wechselvorrichtung aus einer Standby-Stellung in eine Aktivstellung gebracht wird, mittels dieser Sensoreinheit in der Aktivstellung eine Messung durchgeführt wird und diese Sensoreinheit nach der Messung durch Bewegung der Wechselvorrichtung unmittelbar wieder in die Standby-Stellung verbracht wird. Dadurch wird vorteilhafterweise eine Expositionszeit der Sensoreinheiten gegenüber dem Garraum besonders gering gehalten.

Ist eine der Sensoreinheiten eine optische Kamera, kann diese in einer Weiterbildung zu Beginn eines Garvorgangs eingesetzt werden, um in dem Garraum befindliches Gargut zu erkennen, zu vermessen und/oder bildlich darzustellen. In noch einer Weiterbildung wird die optische Kamera anschließend nur noch in größeren Zeitabständen (z.B. von einer bis fünf Minuten) für eine kurze Zeitdauer zur Aufnahme eines Bilds benötigt, um einen Garfortschritt des Garguts festzustellen. Wird die optische Kamera nur zur Bildaufnahme vor die Wandungsöffnung bewegt und nach Bildaufnahme unmittelbar wieder in die Standby-Stellung verbracht, sind die thermische Belastung und die Verschmutzungsgefahr stark verringert. Die optische Kamera kann dann vorteilhafterweise sehr preisgünstig ausgeführt sein.

Eine bildgebende IR-Kamera mag insbesondere bei einem Mikrowellenbetrieb (einer schnellen Betriebsart, die typischerweise eine kurze Gardauer aufweist) in regelmäßigen Zeitabständen für eine Aufnahme in die Aktivposition verfahren und dann wieder in die Standby-Stellung gefahren werden, in der sie thermisch gekühlt werden kann und vor Verschmutzung geschützt ist.

Allgemein können während eines Garvorgangs wechselweise mehrere (unterschiedliche) Sensoreinheiten mittels der Wechselvorrichtung in die Aktivstellung bewegt werden. In einer Weiterbildung wird während eines Garvorgangs nur eine der Sensoreinheiten mittels der Wechselvorrichtung in die Aktivstellung bewegt, z.B. eine optische Kamera während eines Garbetriebs unter Verwendung von IR-Strahlungskörpern wie Widerstandsheizkörpern und eine IR-Kamera während eines Mikrowellenbetriebs. Dazu kann das Gargerät beispielsweise ein Backofen mit Mikrowellenfunktionalität sein.

Allgemein wird mittels des vorliegenden Gargeräts die wechselweise oder zeitdiskrete Nutzung verschiedener Sensoreinheiten an einem gemeinsamen Ort ausgenutzt. Das ist insbesondere für Sensoreinheiten vorteilhaft, deren Auswertung keinen kontinuierlichen oder quasi-kontinuierlichen Datenstrom mit möglichst vielen Messungen pro Zeiteinheit über einen längeren Zeitraum voraussetzt. So benötigt die Auswertung von Bildinformationen für Messzwecke (z.B. eine IR-Auswertung von Temperaturverläufen oder eine optische Erkennung von Gargut oder Lichtprojektionsmustern) keinen kontinuierlichen Datenstrom mit möglichst vielen Bildern pro Zeiteinheit über einen längeren Zeitraum, wie dies typischerweise bei Bildübertragung bewegter Sequenzen (Film) notwendig wäre.

Dem Vorsehen der Wechselvorrichtung steht nicht entgegen, dass mittels anderer, nicht an der Wechselvorrichtung angeordneter Sensoren oder Sensoreinrichtungen ebenfalls mindestens eine, insbesondere weitere Eigenschaft des Garraums permanent detektierbar ist. Beispielsweise kann ein Temperatursensor zum Abfühlen einer Garraumtemperatur so angeordnet sein (beispielsweise in dem Garraum), dass er die Garraumtemperatur kontinuierlich oder quasi-kontinuierlich messen kann und die Wechselvorrichtung eine optische Kamera und eine IR-Kamera aufweist. Auch kann ein Feuchtigkeitssensor und/oder mindestens ein chemischer Sensor je nach technischer Vorgabe permanent oder an der Wechselvorrichtung vorgesehen sein.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden schematischen Beschreibung eines Ausführungsbeispiels, das im Zusammenhang mit den Zeichnungen näher erläutert wird.
- Fig.1: zeigt als Schnittdarstellung in Seitenansicht skizzenhaft einen Ausschnitt aus einem Gargerät gemäß einem ersten Ausführungsbeispiel im Bereich einer Wechselvorrichtung, die sich in einer Ruhestellung befindet;
- Fig.2: zeigt in einer zu Fig.1 analogen Darstellung eine Variante des Gargeräts gemäß dem ersten Ausführungsbeispiel mit einer unterschiedlich geformten Garraumwandung;
- Fig.3: zeigt in einer zu Fig.1 analogen Darstellung noch eine Variante des Gargeräts gemäß dem ersten Ausführungsbeispiel mit einer zusätzlichen Schutzscheibe;
- Fig.4: zeigt in einer zu Fig.1 analogen Darstellung das Gargerät gemäß einem zweiten Ausführungsbeispiel mit einer weiteren Wechselvorrichtung in der Ruhestellung;
- Fig.5: zeigt in Schrägansicht ein Konstruktionsbeispiel eines Trägers der Wechselvorrichtung des Gargeräts gemäß dem ersten Ausführungsbeispiel;
- Fig.6: zeigt als Schnittdarstellung in Seitenansicht skizzenhaft einen Ausschnitt aus einer Variante des Gargeräts gemäß dem ersten Ausführungsbeispiel im Bereich der Wechselvorrichtung;
- Fig.7: zeigt als Schnittdarstellung in Seitenansicht skizzenhaft einen Ausschnitt aus einem Gargerät gemäß einem dritten Ausführungsbeispiel im Bereich einer Wechselvorrichtung; und
- Fig.8: zeigt in einer Ansicht von schräg oben eine Wechselvorrichtung eines Gargeräts gemäß einem vierten Ausführungsbeispiel.

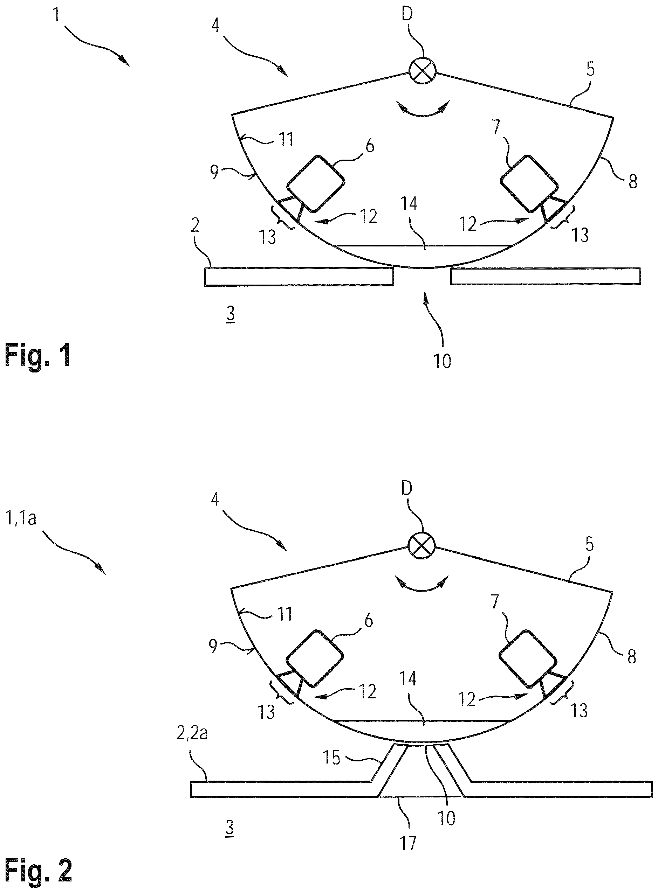

**Fig.1** zeigt als Schnittdarstellung in Seitenansicht skizzenhaft einen Ausschnitt aus einem Gargerät 1, das einen mittels einer Garraumwandung 2 begrenzten Garraum 3 aufweist. Außerhalb des Garraums 3 ist eine motorisch bewegbare Wechselvorrichtung 4 vorhanden, die in ihrer Ruhestellung gezeigt ist. Die Wechselvorrichtung 4 weist hier einen um eine Drehachse D motorisch drehbaren Träger 5 auf, an dem zwei Sensoreinheiten angeordnet sind, nämlich eine optische Kamera 6 und eine IR-Kamera 7. Der Motor zur Drehung des Trägers 5 ist nicht eingezeichnet, kann aber z.B. ein Schrittmotor sein.

Der Träger 5 weist hier eine bogensektorförmig, insbesondere ringsektorförmig, um seine Drehachse D angeordnete bandförmige Trägerwand 8 auf. Eine Außenseite 9 der Trägerwand 8 ist vor einer Wandungsöffnung 10 in der Garraumwandung 2 bewegbar, insbesondere darüber hinwegbewegbar. Der die Wandungsöffnung 10 aufweisende Teilbereich der Garraumwandung 2 ist hier eine Decke des Garraums 2. Die optische Kamera 6 und die IR-Kamera 7 sind an der Innenseite 11 der Trägerwand 8 an entsprechenden Bestückplätzen 12 befestigt. Sie sind durch ein jeweiliges Fenster 13 in der Trägerwand 8 gerichtet und weisen also ein durch das jeweilige Fenster 13 betrachtbares Sichtfeld auf. Die Kameras 6 und 7 sind also ebenfalls bogenförmig um die Drehachse D des Trägers angeordnet, und zudem in Bezug auf die Drehachse D radial nach außen ausgerichtet.

An der Trägerwand 8 ist ferner eine Abdeckung 14 vorhanden, die hier entlang der Trägerwand 8 bzw. in Umfangsrichtung der Drehachse D zwischen der optischen Kamera 6 und der IR-Kamera 7 bzw. deren Bestückplätzen 12 angeordnet ist. Die optische Kamera 6 und die IR-Kamera 7 bzw. deren Bestückplätze 12 sind also in Drehrichtung durch die Abdeckung 14 voneinander getrennt. Die optische Kamera 6, die IR-Kamera 7 und die Abdeckung 14 sind in Umfangs- oder Drehrichtung zueinander versetzt angeordnet, insbesondere äquidistant.

Durch Drehung des Trägers 5 um die Drehachse, z.B. mittels einer nicht dargestellten Steuereinrichtung, können die optische Kamera 6, die IR-Kamera 7 und die Abdeckung 14 wechselweise vor die Wandungsöffnung 10 verbracht werden. Die Drehachse D liegt in diesem Ausführungsbeispiel parallel zu der Garraumwandung 2. Soll z.B. ein optisches Bild oder ein IR-Bild aus dem Garraum 3 aufgenommen werden, wird der Träger 5 in eine Winkelstellung gedreht, bei der das dem Bestückplatz 12 der optischen Kamera 6 bzw. der IR-Kamera 7 zugehörige Fenster 13 mit der Wandungsöffnung 10 in Deckung gebracht ist. Der Garraum 3 ist für die optische Kamera 6 oder die IR-Kamera 7 also durch das jeweilige Fenster 13 und die Wandungsöffnung 10 einsichtig. In dieser "AktivStellung" der optischen Kamera 6 bzw. der IR-Kamera 7 kann diese mindestens ein Bild aus dem Garraum 3 aufnehmen.

Werden die optische Kamera 6 und die IR-Kamera 7 nicht gebraucht, wird der Träger 5 in seine Ruhestellung gedreht, in der sich beide Kameras 6, 7 in ihrer "Standby-Stellung" befinden. Nun überdeckt die Abdeckung 14 die Wandungsöffnung 10, insbesondere dicht. Die Abdeckung 14 ist also anstelle der Kameras 6 und 7 vor die Wandungsöffnung 10 drehbar. Die Anordnung mit der Abdeckung 14 zwischen den beiden Kameras 6 und 7 ergibt den Vorteil, dass eine nur geringe Drehung nötig ist, um die Kameras 6 und 7 aus ihrer Standby-Stellung vor die Wandungsöffnung 10 in ihre Aktivstellung zu bringen.

**Fig.2** zeigt in einer zu Fig.1 analogen Darstellung eine Variante 1a des Gargeräts 1 mit einer unterschiedlich geformten Weiterbildung 2a der Garraumwandung 2. Und zwar weist die Garraumwand 2, 2a im Bereich der Wandungsöffnung 10 eine aus dem Garraum 3 gerichtete Ausstülpung 15 oder Rücksprung auf. Die Ausstülpung 15 ist rohrförmig, insbesondere kegelstumpf- oder trichterförmig ausgebildet und weist die Wandungsöffnung 10 an ihrer innenseitigen Stirnfläche auf. Diese Variante weist den allgemeinen Vorteil auf, dass die Kameras 6, 7 (und allgemein die Sensoreinheiten) weiter weg von der ggf. heißen Garraumwand 2 positioniert sind und also in kühlerer Umgebung eingebaut sind. Auch wird so eine leichtere Kühlung ermöglicht, da sich durch den größeren Abstand zu der restlichen Garraumwandung 2 bzw. zu dem Garraum 3 ein höherer Wärmeleitwiderstand ergibt. Die Ausstülpung 15 kann durch Formung (z.B. Tiefziehen, Prägen usw.) der Garraumwandung 2 hergestellt werden. Alternativ kann die Ausstülpung 15 ein separat hergestelltes und dann mit der restlichen Garraumwandung 2 verbundenes Bauteil sein. Dadurch wird der Vorteil erreicht, dass die Ausstülpung 15 auf eine besonders effektive Reduzierung der Wärmeleitung hin ausgebildet werden kann. So kann sie z.B. aus schlecht wärmeleitender Keramik hergestellt sein.

Durch die optionale Trichter- oder Kegelstumpfform der Ausstülpung 15 wird der weitere Vorteil erreicht, dass das Sichtfeld der Kameras 6, 7 nicht oder nicht merklich eingeschränkt wird.

Ein weiterer, für Mikrowellengeräte (z.B. eigenständige Mikrowellengeräte oder Backöfen mit zusätzlicher Mikrowellenfunktion) wichtiger Vorteil besteht darin, dass die Ausstülpung 15 als Mikrowellen-Barriere ausgebildet werden kann, da so ein Durchtritt von Mikrowellen durch die Wandungsöffnung 10 verhindert werden kann. Dazu ist die Ausstülpung15 im allgemeinen Fall ein Rohr, das so eng ist, dass keine Wellenausbreitung durch das Rohr mehr möglich ist. Die hier optionale Trichterform der Ausstülpung 15 verstärkt ihre Dichtwirkung, so dass die Mikrowellendichtigkeit bereits nach kürzerer Strecke erreicht wird.

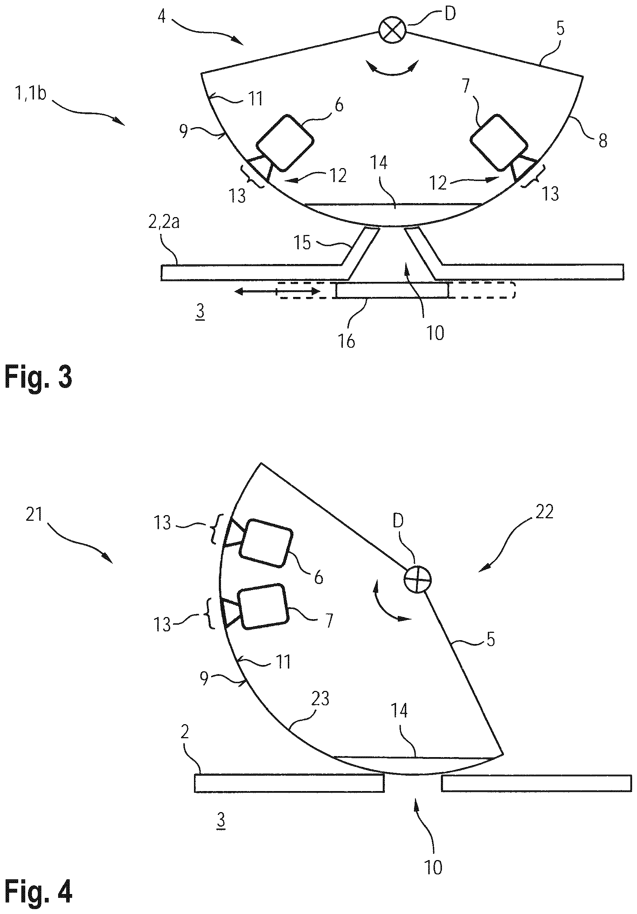

**Fig.3** zeigt in einer zu Fig.1 analogen Darstellung noch eine Variante 1b des Gargeräts 1 mit Ausstülpung 15 und zusätzlich einer Schutzscheibe 16. Dieses Gargerät 1, 1b ist damit als eine Weiterbildung des Gargeräts 1a gezeigt, jedoch kann die Schutzscheibe 16 auch allgemein verwendet werden, z.B. mit dem Gargerät 1 ohne Ausstülpung 15. Grundsätzlich kann die Schutzscheibe 16 alternativ oder zusätzlich zu der Abdeckung 14 vorhanden sein. Die Schutzscheibe 16 besteht hier aus preiswertem, für sichtbares Licht transparentem, aber für (N)IR-Strahlung undurchlässigem Glas. Sie ist z.B. wie gezeigt garraumseitig parallel zu der Garraumwandung 2a und der Wandungsöffnung 10 motorisch bewegbar. Die Schutzscheibe 16 kann einen Teil der Wechselvorrichtung 4 darstellen oder getrennt davon ansteuerbar sein.

Die Bewegung der Schutzscheibe 16 kann beispielsweise folgendermaßen angesteuert werden: in der Ruhestellung des Trägers 5 überdeckt auch die Schutzscheibe 16 die Ausstülpung 15, nämlich deren garraumseitige Stirnfläche 17. Die Abdeckung 14 und die Schutzscheibe 16 sind dann z.B. mehrere Millimeter bis wenige Zentimeter voneinander entfernt angeordnet und insbesondere parallel zueinander ausgerichtet. Dieser doppelte Schutz vor Wärme und Verschmutzungen aus dem Garraum 3 ist insbesondere während eines Pyrolysebetriebs vorteilhaft.

Die Schutzscheibe 16 selbst hat dabei einen doppelten Effekt: zum einen schafft sie eine Abschottung und hindert dadurch heiße Luft am Aufsteigen bis zur Sensorfläche als auch ein Eindringen von Flüssigkeits- und Fettspritzern, zum anderen kann sie aus schlecht wärmeleitendem Material ausgeführt sein (so ist z.B. Glas oder Glaskeramik im Vergleich zu Stahl schlecht wärmeleitend), womit sich ebenfalls die Wärmeleitung der Garraumwand 2a im Bereich der Ausstülpung 15 erhöht. Es ist eine Weiterbildung der Schutzscheibe 16, dass sie, wie gestrichelt angedeutet, deutlich größer ausgeführt ist, als die garraumseitige Stirnseite der Ausstülpung, also seitlich merklich über diese Stirnseite herausragt. Auf diese Weise erhöht sich der Wärmewiderstand der davon bedeckten Garraumwandung 2a, so dass weniger Wärme in Richtung der Ausstülpung 15 und der Kameras 6, 7 fließt.

Befindet sich die optische Kamera 6 in ihrer Aktivstellung, verbleibt die dafür transparente Schutzscheibe 16 vor der Ausstülpung 15 und schützt dadurch die optische Kamera 6 vor Wärme und Verschmutzungen aus dem Garraum 3. Befindet sich die IR-Kamera 7 in ihrer Aktivstellung, ist die Schutzscheibe 16 von Ausstülpung 15 wegbewegt und gibt diese somit frei.

Die Ausstülpung 15 kann luftdurchlässig ausgebildet sein, z.B. gelocht oder allgemein perforiert sein, um die Wärmeleitung dadurch weiter zu reduzieren. Diese Reduzierung der Wärmeleitung kann besonders effektiv sein, wenn sich die Ausstülpung 15 in einem Bereich eines Kühlluftstroms des Gargeräts 1 befindet.

**Fig.4** zeigt in einer zu Fig.1 analogen Darstellung ein Gargerät 21 mit einer Wechselvorrichtung 22 in der Ruhestellung. Das Gargerät 21 ist ähnlich zu dem Gargerät 1, 1a oder 1b ausgestaltet, jedoch sind bei der Wechselvorrichtung 22 die beiden zwei Bestückplätze 12 bzw. die beiden Kameras 6, 7 in Umfangs- oder Drehrichtung nebeneinander an einem Endabschnitt der Trägerwand 23 angeordnet sind und die Abdeckung 14 an dem anderen Endabschnitt der Trägerwand 23 angeordnet. Dadurch wird der Vorteil erreicht, dass die Kameras 6 und 7 in der Ruhestellung der Wechselvorrichtung 22 vergleichsweise weit von der Garraumwandung 2 und der Wandungsöffnung 10 entfernt positioniert sind und folglich vergleichsweise geringen Temperaturen ausgesetzt sind.

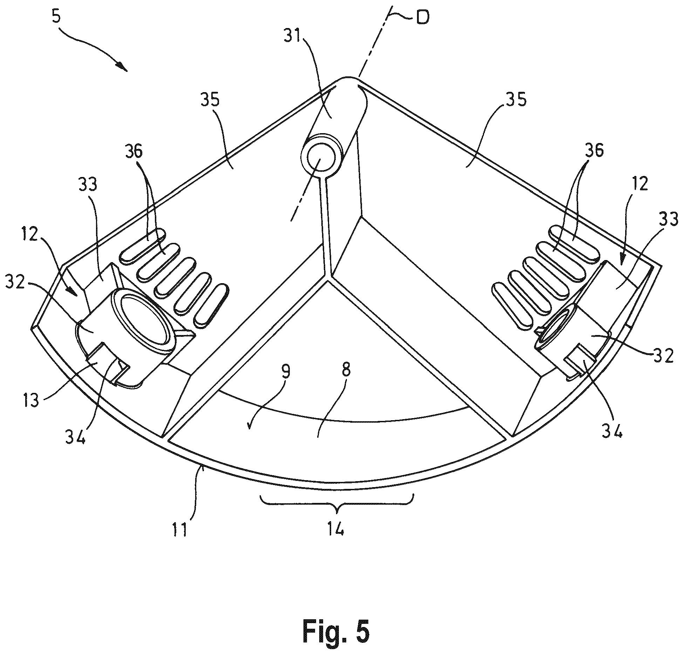

**Fig.5** zeigt in Schrägansicht ein detaillierteres Konstruktionsbeispiel des Trägers 5 der Wechselvorrichtung 4. Der Träger 5 weist ein zentrales Rohr 31 zum Aufstecken auf eine Antriebswelle des Motors auf. Die bogenförmige Trägerwand 8 weist zwei Bestückplätze 12 mit jeweils einer radial zu der Drehachse D ausgerichteten Hülse 32 auf. Eine äußere offene Stirnseite der Hülsen 32 entspricht dem jeweiligen Fenster 13. An der anderen, innenseitigen Stirnseite in die jeweilige Kamera 6 bzw. 7 ansetzbar, insbesondere deren jeweiliges Objektiv. Seitlich mündet in die Hülsen 32 jeweils ein trichterförmiger Luftstromsammler 33, der in einen Bereich eines internen Kühlluftstroms des Gargeräts 1 gerichtet ist. Auf der gegenüberliegenden Seite ist in der Hülse 32 eine Luftaustrittsöffnung 34 vorhanden. Diese Anordnung ermöglicht es, dass ein Luftstrom die jeweilige Hülse 32 quert und dadurch z.B. aus dem Garraum 3 entweichende Fett- und Flüssigkeitsspritzer ablenkt und/oder eine Temperatur an den Kameras 6, 7 reduziert, wenn sich die Kamera 6 bzw. 7 in ihrer Aktivstellung befindet.

Der Träger 5 weist hier seitlich zu den Bestückplätzen 12 jeweils plattenförmige Bereiche 35 auf, die von dem Rohr 31 zu der Trägerwand 8 reichen und der mechanischen Stabilisierung dienen. Um die Kameras 6 und 7 besonders effektiv durch den internen Kühlluftstrom kühlen zu können, weisen die plattenförmige Bereiche 35 auf Höhe der Kameras 6 und 7 jeweils Lüftungsschlitze 36 zu deren Belüftung auf.

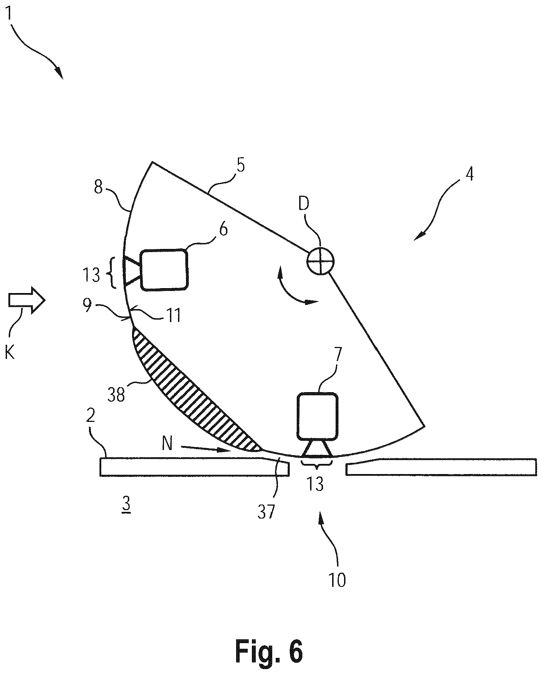

**Fig.6** zeigt als Schnittdarstellung in Seitenansicht skizzenhaft einen Ausschnitt aus einer Variante des Gargeräts 1 im Bereich des Trägers 5. In dieser ist zwischen der Außenseite 9 der Trägerwand 8 und der Garraumwandung 2 im Bereich der Wandungsöffnung 10 ein forciert belüftbarer Spalt 37 vorhanden. Dass der Spalt 37 forciert belüftbar ist, kann bedeuten, dass durch ihn ein Luftnebenstrom N des internen Kühlluftstroms K strömt. Dazu kann die Trägerwand 8 so ausbildet und/oder angeordnet sein, dass sie die Abzweigung des Luftnebenstroms N bewirkt.

Die Abdeckung 38 kann wie gezeigt leicht über die Außenseite 9 vorstehen, so dass dann, wenn sich der Träger 5 in der Ruherstellung befindet und folglich die Abdeckung 38 der Wandungsöffnung 10 gegenüberliegt, der Spalt 37 verschlossen ist.

Die Anordnung nach Fig.6 kann alternativ oder zusätzlich zu der Anordnung nach Fig.5 eingesetzt werden und erfüllt den gleichen Zweck.

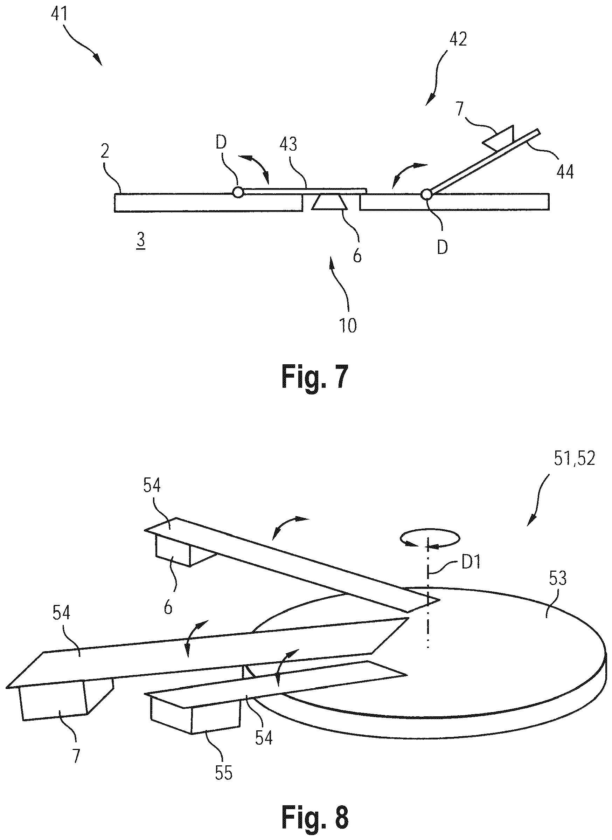

**Fig.7** zeigt als Schnittdarstellung in Seitenansicht skizzenhaft einen Ausschnitt aus einem Gargerät 41 im Bereich einer Wechselvorrichtung 42. Das Gargerät 41 kann einen ähnlichen Grundaufbau aufweisen wie das Gargerät 1, 1a oder 1b, jedoch weist die Wechselvorrichtung 42 nun mehrere motorisch bewegbare Träger 43 und 44 auf, an denen jeweils eine Sensoreinheit angeordnet ist, hier z.B. die optische Kamera 6 und die IR-Kamera 7. Die Träger 43 und 44 sind individuell verschwenkbar im Bereich einer Außenseite der Garraumwandung 2 angeordnet und hier symmetrisch zu der Wandungsöffnung 10 angeordnet. Wechselweise können die Träger 43 und 44 so zwischen ihrer hochgeklappten Standby-Stellung und ihrer heruntergeklappten Aktivstellung (in welcher die Kamera 6 oder 7 an der Wandungsöffnung 10 angeordnet ist) gedreht oder verschwenkt werden.

In einer nicht gezeigten Variante kann ein weiterer Träger vorhanden sein, der als Abdeckung ausgebildet ist oder eine Abdeckung 4 aufweist. Ist dieser Träger heruntergeklappt, verschließt die Abdeckung die Wandungsöffnung 10, und die Wechselvorrichtung 42 befindet sich in ihrer Ruhestellung. Die mehr als zwei Träger sind dann vorteilhafterweise ringförmig um die Wandungsöffnung 10 herum angeordnet.

**Fig.8** zeigt in einer Ansicht von schräg oben eine stark vereinfachte Skizze einer Wechselvorrichtung 52 eines Gargeräts 51. Die Wechselvorrichtung 52 weist nun eine um eine erste, hier vertikale Drehachse D1 motorisch drehbare, hier kreisscheibenförmige Basis ("Grundscheibe") 53 auf. An der Grundscheibe 53 sind drei radial ausgerichtete verschwenkbare Träger ("Ausleger") 54 winkelversetzt um die Drehachse D1 angebracht. An den Unterseiten der freien Endabschnitte der Ausleger 54 sind die Kameras 6 und 7 sowie eine Abdeckung 55 angeordnet. Die Kameras 6 und 7 sind also im Wesentlichen parallel zu der ersten Drehachse D1 ausgerichtet.

Die Grundscheibe 53 positioniert die Ausleger 54, welche dann entsprechend dem in dem Gargerät 51 zur Verfügung stehenden Bauraum flexibel gehoben und gesenkt werden können. Diese Bewegung der Ausleger 54 um eine jeweilige horizontale zweite Drehachse (o. Abb.) kann auch als Nickbewegung bezeichnet werden. Aufgrund ihrer insbesondere individuell einstellbaren Nickbewegung können die Ausleger 54 während der Drehung der Grundscheibe 53 Hindernissen ausweichen (z.B. durch temporäres Absenken oder Anheben während der Drehung), in ihrer Aktivstellung ausreichend tief abgesenkt zur Garraumwand 2 stehen und in ihrer Standby-Stellung für optimale Kühlung oder für eine geringe Beeinflussung darunter angeordneter Funktionsräume (z.B. von Kühlluftführungen) hoch angehoben sein.

Ausgestaltungen der obigen Ausführungsbeispiele können auch in anderen Ausführungsbeispielen umgesetzt sein, falls möglich. Beispielsweise können die Ausgestaltungen gemäß Fig.2, Fig.3, Fig.5 und Fig.6 analog auf das Gargerät 21 angewandt werden.

Allgemein kann unter "ein", "eine" usw. eine Einzahl oder eine Mehrzahl verstanden werden, insbesondere im Sinne von "mindestens ein" oder "ein oder mehrere" usw., solange dies nicht explizit ausgeschlossen ist, z.B. durch den Ausdruck "genau ein" usw.

Auch kann eine Zahlenangabe genau die angegebene Zahl als auch einen üblichen Toleranzbereich umfassen, solange dies nicht explizit ausgeschlossen ist.

### Bezugszeichenliste

- 1: Gargerät
- 1a: Gargerät
- 1b: Gargerät
- 2: Garraumwandung
- 2a: Garraumwandung
- 3: Garraum
- 4: Wechselvorrichtung
- 5: Drehbarer Träger
- 6: Optische Kamera
- 7: IR-Kamera
- 8: Trägerwand
- 9: Außenseite der Trägerwand
- 10: Wandungsöffnung
- 11: Innenseite der Trägerwand
- 12: Bestückplatz
- 13: Fenster
- 14: Abdeckung
- 15: Ausstülpung aus Garraumwand
- 16: Schutzscheibe
- 17: Garraumseitige Stirnfläche
- 21: Gargerät
- 22: Wechselvorrichtung
- 23: Trägerwand
- 31: Rohr
- 32: Hülse
- 33: Luftstromsammler
- 34: Luftaustrittsöffnung
- 35: Plattenförmiger Bereich
- 36: Lüftungsschlitz
- 37: Spalt
- 38: Abdeckung
- 41: Gargerät
- 42: Wechselvorrichtung
- 43: Träger
- 44: Träger
- 51: Gargerät
- 52: Wechselvorrichtung
- 53: Grundscheibe
- 54: Ausleger
- 55: Abdeckung
- D: Drehachse
- D1: Erste Drehachse
- K: Kühlluftstrom
- N: Luftnebenstrom

## Patentansprüche

1. Gargerät (1; 1a; 1b; 21; 41; 51), aufweisend einen mittels einer Garraumwandung (2; 2a) begrenzten Garraum (3), mindestens zwei außerhalb des Garraums (3) angeordneten Sensoreinheiten (6, 7) und eine Öffnung (10) in der Garraumwandung (2), durch welche mittels einer der mindestens zwei Sensoreinheiten (6, 7) mindestens eine Eigenschaft des Garraums (3) detektierbar ist, **dadurch gekennzeichnet, dass**
- außerhalb des Garraums (3) eine motorisch bewegbare Wechselvorrichtung (4; 22; 42; 52) vorhanden ist,
- die Wechselvorrichtung (4; 22; 42; 52) mit mindestens zwei Sensoreinheiten (6, 7) zur Detektion mindestens einer Eigenschaft des Garraums (3) ausgerüstet ist und
- die Wechselvorrichtung (4; 22; 42; 52) durch motorische Bewegung so einstellbar ist, dass jeweils eine der Sensoreinheiten (6, 7) vor die Öffnung (10) verbringbar ist.

2. Gargerät (1; 1a; 1b; 21; 41; 51) nach Anspruch 1, wobei mindestens eine der Sensoreinheiten
- eine optische Kamera (6),
- einen Temperatursensor, insbesondere eine IR-Kamera (7),
- einen Stoffsensor,
- einen Feuchtigkeitssensor,
aufweist.

3. Gargerät (41) nach einem der vorhergehenden Ansprüche, wobei die Wechselvorrichtung (42) mehrere motorisch bewegbare Träger (43, 44) aufweist, an denen jeweils eine Sensoreinheit (6, 7) angeordnet ist.

4. Gargerät (1; 1a; 1b; 21; 51) nach einem der Ansprüche 1 oder 2, wobei die Wechselvorrichtung (4; 22; 52) einen motorisch bewegbaren Träger (5; 53, 54) aufweist, an dem die mindestens zwei Sensoreinheiten (6, 7) angeordnet sind.

5. Gargerät (1; 1a; 1b; 21; 51) nach Anspruch 4, wobei der Träger (5; 53, 54) motorisch drehbar ist und dessen Winkelstellungen so einstellbar sind, dass durch Drehung des Trägers (5; 53, 54) jeweils eine der Sensoreinheit (6, 7) vor die Öffnung (10) verbringbar ist.

6. Gargerät (1; 1a; 1b; 21; 51) nach einem der vorhergehenden Ansprüche, wobei die Sensoreinheiten (6, 9) bogenförmig um eine Drehachse (D, D1) des Trägers (5; 53, 54) angeordnet sind.

7. Gargerät (1; 1a; 1b; 21) nach Anspruch 6, wobei die Sensoreinheiten (6, 7) in Bezug auf die Drehachse (D) des Trägers (5) radial nach außen ausgerichtet sind.

8. Gargerät (51) nach Anspruch 6, **dadurch gekennzeichnet, dass** die Sensoreinheiten (6, 7) parallel zu einer Drehachse (D1) des Trägers (53, 54) ausgerichtet sind.

9. Gargerät (1; 1a; 1b; 21) nach Anspruch 7, wobei
- der Träger (5) eine bogensektorförmig um seine Drehachse (D) angeordnete bandförmige Trägerwand (8; 23) aufweist,
- eine Außenseite (9) der Trägerwand (8; 23) vor der Öffnung (10) in der Garraumwandung (2) bewegbar ist und
- an einer Innenseite (11) der Trägerwand (8; 23) zueinander versetzt mindestens zwei Bestückplätze (12) für Sensoreinheiten (6, 7) vorhanden sind, die jeweils eine Befestigungsstruktur (32) für eine zugehörige Sensoreinheit (6, 7) und ein mit der Öffnung (10) in der Garraumwandung (2) in Deckung bringbares Fenster (13) aufweisen.

10. Gargerät (1; 1a; 1b; 21; 41; 51) nach einem der vorhergehenden Ansprüche, wobei die Wechselvorrichtung (4; 22; 42; 52) zusätzlich mit mindestens einer Abdeckung (14; 38; 55) ausgerüstet ist und so einstellbar ist, dass die Abdeckung (14; 38; 55) anstelle der Funktionseinheiten (6, 7) vor die Öffnung (10) verbringbar ist.

11. Gargerät (1; 1a; 1b) nach den Ansprüchen 9 und 10, wobei mindestens zwei Bestückplätze (12) durch die Abdeckung (14) voneinander getrennt sind.

12. Gargerät (21) nach den Ansprüchen 9 und 10, wobei mindestens zwei Bestückplätze (12) nebeneinander an einem Endabschnitt der Trägerwand (23) angeordnet sind und die Abdeckung (14) an dem anderen Endabschnitt angeordnet ist.

13. Gargerät (1; 1a; 1b; 21; 41; 51) nach einem der vorhergehenden Ansprüche, wobei die Sensoreinheiten (6, 7) in dem Gargerät (1; 21; 41; 51) belüftbar angeordnet sind.

14. Gargerät (1; 1a; 1b) nach einem der Ansprüche 6 bis 13, wobei zwischen dem Träger (5) und der Garraumwandung (2) im Bereich der Öffnung (10) ein forciert belüftbarer Spalt (37) vorhanden ist.

15. Gargerät (1a; 1b) nach einem der vorhergehenden Ansprüche, wobei die Garraumwandung (2a) im Bereich der Öffnung (10) als eine Ausstülpung (15) geformt ist.

16. Gargerät (1a; 1b) nach einem der vorhergehenden Ansprüche, ferner aufweisend eine motorisch vor die Öffnung (10) bewegbare Schutzscheibe (16), die für zumindest eine der Sensoreinheiten (6, 7) messtechnisch durchlässig und für zumindest eine der Sensoreinheiten (6, 7) messtechnisch undurchlässig ist.

17. Verfahren zum Betreiben eines Gargeräts (1; 1a; 1b; 21; 41; 51) nach einem der vorhergehenden Ansprüche, wobei während eines Garbetriebs zumindest eine der Sensoreinheiten (6, 7) bei Bedarf durch Bewegung der Wechselvorrichtung (4; 22; 42; 52) aus einer Standby-Stellung in eine Aktivstellung gebracht wird, mittels dieser Sensoreinheit (6, 7) in der Aktivstellung eine Messung durchgeführt wird und diese Sensoreinheit (6, 7) unmittelbar nach der Messung durch Bewegung der Wechselvorrichtung (4; 22; 42; 52) wieder in die Standby-Stellung verbracht wird.

## Claims

1. Cooking appliance (1; 1a; 1b; 21; 41; 51), having a cooking chamber (3) delimited by means of a cooking chamber wall (2; 2a), at least two sensor units (6, 7) arranged outside the cooking chamber (3) and an opening (10) in the cooking chamber wall (2), through which opening at least one property of the cooking chamber (3) can be detected by means of one of the at least two senor units (6, 7), **characterised in that**
- a motor-movable changing device (4; 22; 42; 52) is provided outside the cooking chamber (3),
- the changing device (4; 22; 42; 52) is equipped with at least two sensor units (6, 7) for detecting at least one property of the cooking chamber (3), and
- the changing device (4; 22; 42; 52) can be set in such a way, by motorised movement, that one of the sensor units (6, 7) can be positioned in front of the opening (10) at a time.

2. Cooking appliance (1; 1a; 1b; 21; 41; 51) according to claim 1, wherein at least one of the sensor units has
- an optical camera (6),
- a temperature sensor, in particular an IR camera (7),
- a substance sensor,
- a humidity sensor.

3. Cooking appliance (41) according to one of the preceding claims, wherein the changing device (42) has a number of motor-movable supports (43, 44), on which a sensor unit (6, 7) is arranged in each case.

4. Cooking appliance (1; 1a; 1b; 21; 51) according to one of claims 1 or 2, wherein the changing device (4; 22; 52) has a motor-movable support (5; 53, 54), on which the at least two sensor units (6, 7) are arranged.

5. Cooking appliance (1; 1a; 1b; 21; 51) according to claim 4, wherein the support (5; 53, 54) is motor-rotatable and its angular positions can be adjusted such that one of the sensor unit (6, 7) can be positioned in front of the opening (10) by rotating the support (5; 53, 54).

6. Cooking appliance (1; 1a; 1b; 21; 51) according to one of the preceding claims, wherein the sensor units (6, 9) are arranged in an arch-shape about an axis of rotation (D, D1) of the support (5; 53, 54).

7. Cooking appliance (1; 1a; 1b; 21) according to claim 6, wherein the sensor units (6, 7) are aligned radially outward in respect of the axis of rotation (D) of the support (5).

8. Cooking appliance (51) according to claim 6, **characterised in that** the sensor units (6, 7) are aligned parallel to an axis of rotation (D1) of the support (53, 54).

9. Cooking appliance (1; 1a; 1b; 21) according to claim 7, wherein
- the support (5) has a linear support wall (8; 23) arranged in the manner of an arch sector about its axis of rotation (D),
- an exterior (9) of the support wall (8; 23) can be moved in front of the opening (10) in the cooking chamber wall (2) and
- at least two insertion locations (12) for sensor units (6, 7) are provided offset in relation to one another on an interior (11) of the support wall (8; 23), each of which has a fastening structure (32) for an associated sensor unit (6, 7) and a window (13) which can be congruent with the opening (10) in the cooking chamber wall (2).

10. Cooking appliance (1; 1a; 1b; 21; 41; 51) according to one of the preceding claims, wherein the changing device (4; 22; 42; 52) is additionally equipped with at least one cover (14; 38; 55) and can be adjusted so that the cover (14; 38; 55), instead of the functional units (6, 7), can be positioned in front of the opening (10).

11. Cooking appliance (1; 1a; 1b) according to one of claims 9 and 10, wherein at least two insertion locations (12) are separated from one another by means of the cover (14).

12. Cooking appliance (21) according to one of claims 9 and 10, wherein at least two insertion locations (12) are arranged adjacent to one another on an end section of the support wall (23) and the cover (14) is arranged on the other end section.

13. Cooking appliance (1; 1a; 1b; 21; 41; 51) according to one of the preceding claims, wherein the sensor units (6, 7) in the cooking appliance (1; 21; 41; 51) are arranged to be aeratable.

14. Cooking appliance (1; 1a; 1b) according to one of claims 6 to 13, wherein a gap (37) which is aeratable by force is provided in the region of the opening (10) between the support (5) and the cooking chamber wall (2) .

15. Cooking appliance (1a; 1b) according to one of the preceding claims, wherein the cooking chamber wall (2a) is moulded as a protuberance (15) in the region of the opening (10).

16. Cooking appliance (1a; 1b) according to one of the preceding claims, further having a protective panel (16) which can be moved by motor in front of the opening (10) and which is permeable for at least one of the sensor units (6, 7) by means of measurement technology and is impermeable for at least one of the sensor units (6, 7) by means of measurement technology.

17. Method for operating a cooking appliance (1; 1a; 1b; 21; 41; 51) according to one of the preceding claims, wherein during cooking operation at least one of the sensor units (6, 7) is brought from a standby position into an active position if necessary by moving the changing device (4; 22; 42; 52), a measurement is carried out by means of this sensor unit (6, 7) in the active position and this sensor unit (6, 7) is immediately brought back into the standby position after the measurement by moving the changing device (4; 22; 42; 52).

## Revendications

1. Appareil de cuisson (1; 1a; 1b; 21; 41; 51) comprenant un espace de cuisson (3) délimité par des parois de l'espace de cuisson (2; 2a), au moins deux unités de détection (6, 7) se trouvant à l'extérieur de l'espace de cuisson (3) et une ouverture (10) dans les parois de l'espace de cuisson (2), au moyen desquelles au moins une caractéristique de l'espace de cuisson (3) est détectable par l'une des au moins deux unités de détection (6, 7), **caractérisé en ce que**
- à l'extérieur de l'espace de cuisson (3) se trouve un dispositif de changement (4; 22; 42; 52) à déplacement motorisé,
- le dispositif de changement (4; 22; 42; 52) est équipé d'au moins deux unités de détection (6, 7) pour la détection d'au moins une caractéristique de l'espace de cuisson (3) et
- le dispositif de changement (4; 22; 42; 52) est réglable par mouvement motorisé de sorte qu'à chaque fois l'une des unités de détection (6, 7) peut être amenée devant l'ouverture (10).

2. Appareil de cuisson (1; 1a; 1b; 21; 41; 51) selon la revendication 1, dans lequel au moins l'une des unités de détection comprend
- une caméra optique (6),
- un détecteur de température, en particulier une caméra infrarouge (7),
- un détecteur de matière,
- un détecteur d'humidité.

3. Appareil de cuisson (41) selon l'une des revendications précédentes, dans lequel le dispositif de changement (42) comprend plusieurs supports (43, 44) à déplacement motorisé sur lesquels se trouve à chaque fois une unité de détection (6, 7).

4. Appareil de cuisson (1; 1a; 1b; 21; 51) selon l'une des revendications 1 ou 2, dans lequel le dispositif de changement (4; 22; 52) comprend un support (5; 53, 54) à déplacement motorisé, sur lequel se trouvent les au moins deux unités de détection (6, 7).

5. Appareil de cuisson (1; 1a; 1b; 21; 51) selon la revendication 4, dans lequel le support (5; 53, 54) tourne avec un moteur et dont les positions angulaires peuvent être réglées de sorte que la rotation du support (5; 53, 54) permet d'amener à chaque fois l'une des unités de détection (6, 7) devant l'ouverture (10).

6. Appareil de cuisson (1; 1a; 1b; 21; 51) selon l'une des revendications précédentes, dans lequel les unités de détection (6, 9) se trouvent arquées autour de l'axe de rotation (D, D1) du support (5; 53, 54).

7. Appareil de cuisson (1; 1a; 1b; 21) selon la revendication 6, dans lequel les unités de détection (6, 7) sont orientées radialement vers l'extérieur par rapport à l'axe de rotation (D) du support (5).

8. Appareil de cuisson (51) selon la revendication 6, **caractérisé en ce que** les unités de détection (6, 7) sont orientées parallèlement à l'axe de rotation (D1) du support (53, 54).

9. Appareil de cuisson (1; 1a; 1b; 21) selon la revendication 7, dans lequel
- le support (5) comprend une paroi de support (8; 23) en forme de bande et se trouvant, en formant un secteur arc autour de son axe de rotation (D),
- un côté extérieur (9) de la paroi de support (8; 23) peut être déplacé devant l'ouverture (10) dans les parois de l'espace de cuisson (2) et
- sur un côté intérieur (11) de la paroi de support (8; 23) se trouvent au moins deux endroits prévus (12) pour des unités de détection (6, 7) placées en quinconce, lesquelles comprennent chacune une structure de fixation (32) pour une unité de détection (6, 7) associée et une fenêtre (13) qu'on peut mettre en recouvrement avec l'ouverture (10) dans les parois de l'espace de cuisson (2).

10. Appareil de cuisson (1; 1a; 1b; 21; 41; 51) selon l'une des revendications précédentes, dans lequel le dispositif de changement (4; 22; 42; 52) est équipé en outre d'au moins un recouvrement (14; 38; 55) et est réglable de sorte que le recouvrement (14; 38; 55) peut être amené devant l'ouverture (10) en lieu et place des unités fonctionnelles (6, 7).

11. Appareil de cuisson (1; 1a; 1b) selon les revendications 9 et 10, dans lequel au moins deux endroits prévus (12) sont séparés l'un de l'autre par le recouvrement (14).

12. Appareil de cuisson (21) selon les revendications 9 et 10, dans lequel au moins deux endroits prévus (12) se trouvent à côté l'un de l'autre sur une section terminale de la paroi de support (23) et le recouvrement (14) se trouve sur l'autre section terminale.

13. Appareil de cuisson (1; 1a; 1b; 21; 51) selon l'une des revendications précédentes, dans lequel les unités de détection (6, 9) dans l'appareil de cuisson (1; 21; 41; 51) sont agencées pour être ventilées.

14. Appareil de cuisson (1; 1a; 1b) selon l'une des revendications 6 à 13, dans lequel un entrefer (37) à ventilation forcée se trouve entre le support (5) et les parois de l'espace de cuisson (2) dans la zone de l'ouverture (10).

15. Appareil de cuisson (1a ; 1b) selon l'une des revendications précédentes, dans lequel les parois de l'espace de cuisson (2a) sont formées dans la zone de l'ouverture (10) en tant que protubérance (15).

16. Appareil de cuisson (1a ; 1b) selon l'une des revendications précédentes, comprenant en outre une vitre de protection (16) qu'on peut déplacer par un moteur devant l'ouverture (10), et qui, pour au moins l'une des unités de détection (6, 7), est transparente en ce qui concerne des mesures techniques, et qui, pour au moins l'une des unités de détection (6, 7), est non-transparente en ce qui concerne des mesures techniques.

17. Procédé de fonctionnement d'un appareil de cuisson (1; 1a; 1b; 21; 41; 51) selon l'une des revendications précédentes, dans lequel, pendant le fonctionnement de la cuisson, au moins l'une des unités de détection (6, 7) peut, en cas de besoin, passer d'un mode Standby en mode actif par déplacement du dispositif de changement (4; 22; 42; 52), une mesure est réalisée en mode actif au moyen de cette unité de détection (6, 7) et cette unité de détection (6, 7) peut passer à nouveau en mode Standby directement après la mesure par le déplacement du dispositif de changement (4; 22; 42; 52).
